# EUROPEAN PATENT APPLICATION

(11) **EP 1 718 000 A1**
(43) Date of publication of application: **02.11.2006**
(21) Application number: 04818361.0
(22) Date of filing: 17.11.2004
(51) Int. Cl.: H04L 12/56

(54) **PACKET COMMUNICATION NETWORK, ROUTE CONTROL SERVER, ROUTE CONTROL METHOD, PACKET TRANSMISSION DEVICE, ADMISSION CONTROL SERVER, LIGHT WAVELENGTH PATH SETTING METHOD, PROGRAM, AND RECORDING MEDIUM**

(30) Priority: 18.02.2004 JP 2004041250; 20.02.2004 JP 2004044191
(71) Applicant: NIPPON TELEGRAPH AND TELEPHONE CORPORATION, Tokyo 100-8116 (JP)
(72) Inventor: MATSUI, Kenichi NTT Intellectual Property Center, Musashino-shi Tokyo 1808585 (JP); YAGI, Takeshi NTT Intellectual Property Center, Musashino-shi Tokyo 1808585 (JP); NARUSE, Yuuichi NTT Intellectual Property Center, Musashino-shi Tokyo 1808585 (JP); MURAYAMA, Junichi NTT Intellectual Property Center, Musashino-shi Tokyo 1808585 (JP)
(74) Representative: von Samson-Himmelstjerna, Friedrich
(86) International application number: PCT/JP2004/017083
(87) International publication number: WO 2005/079022

(57) **Abstract**

A route control server (1) sends destination information acquired by a router (2) in a managed area and transfer management information corresponding to the destination information to another route control server and determines the output interface of a packet on the basis of the destination information and transfer management information.

A packet transfer apparatus (3) executes mutual conversion and transfer of an upper layer packet on a user terminal side and a lower layer frame on an optical wavelength path side. An admission control server (4) sets, of the optical wavelength paths of the photonic network, an optical wavelength path formed from a cut-through optical wavelength path which has a guaranteed band and directly connects packet transfer apparatuses of transmission source and destination in accordance with an optical wavelength path connection request from a transmission source user terminal.

## Description

### Technical Field

The present invention relates to a route control technique of a packet communication network and, more particularly, to a route control technique of setting a desired route by controlling routers and packet transfer apparatuses included in a large-scale network such as a photonic network.

### Background Art

As the number of Internet users rapidly increases and applications to transmit mass storage data quickly become popular, the traffic amount of a large-scale backbone network at the center of the Internet is explosively increasing.

However, the backbone network has only a limited capacity, like a general communication network. Hence, to increase the traffic amount of the backbone network as much as possible, appropriate route control must be done in the entire network.

Conventionally, a route control method for a general communication network is proposed in which one route control server is arranged for a target network to collectively manage control of all routes in the network (e.g., Japanese Patent Laid-Open Nos. 2003-298631, 2002-247087, and 2001-24699, and Petri Aukia, Murali Kodialam, Pramod V.N. Loppol, T.V. Lakshman, Helena Sarin, Bemhard Suter, "RATES: A Server for MPLS Traffic Engineering", IEEE Network, pp. 34-41, IEEE, 2000).

When this route control method is applied to a large-scale network, the network is divided into a plurality of areas, and a route control server is arranged in each area to control only that area.

On the other hand, along with the development of optical communication technology, photonic networks have been introduced, which implement network transfer functions such as transmission, multiplexing, demultiplexing, switching, and routing by optical layers using dense WDM or optical routing technique (optical switch).

In such a photonic network, when packet transfer apparatuses which accommodate subscriber users are permanently connected by an optical wavelength path, the cost of acquiring an optical wavelength path resource is high. In addition, the system is poor in scalability.

To cope with these problems, conventionally, an optical wavelength path control technique is examined, in which a packet transfer apparatus having an IP transfer function is installed as a terminal apparatus of the photonic network, a connectionless network logically built on a connection network is employed, and an optical wavelength path resource is assigned only between packet transfer apparatuses with large traffic demand while ensuring route reachability between the packet transfer apparatuses by IP transfer (e.g., Junichi, MURAYAMA, al. "Traffic-Driven Optical IP Networking Architecture", IEICE TRANS. COMMUN., VOL. E86-B, NO. 8 AUGUST 2003).

As a means for coping with a band guarantee request for a specific user while reducing the resource acquisition cost in a photonic network, an optical wavelength path control technique of providing an optical wavelength path between user terminals in accordance with a user request is examined (e.g., Takahiro Tsujimoto, Takeshi Yagi, Junichi Murayama, Kazuhiro Matsuda, and Hiroshi Ishii, "Evaluation of Optical Cut-Through Shemes in TSN", IEICE General Conference, 2003, B-7-82, March 2003, and Kenichi Matsui, Takeshi Yagi, Masaki Kaneda, Yuichi Naruse, and Junichi Murayama, "A Study of Cut-Through Optical Path Method for Tera-bit Super Network", Technical Committee on Information Networks (cosponsored by Technical Committee of NS/CS), Session A-4-30, September 2003).

### Disclosure of Invention

### Problem to be Solved by the Invention

When the above-described route control technique is to be applied to a large-scale network, the network is divided into a plurality of areas, and a route control server is arranged in each area to control only that area.

However, when the network is divided into a plurality of areas, and each area is individually controlled by the route control server arranged in that area on the basis of the above-described route control technique, the route control servers operate independently. Hence, the route control servers cannot unitedly control the route of a packet which passes through a plurality of areas so no appropriate route control can be done in the entire network.

For example, when the route control servers independently execute route control in individual areas, a packet which passes through a plurality of areas may be subjected to route control in an area, and optimum route control may be done. However, the packet may be excluded from control targets in another area. Especially, when the number of packets changes, such situations readily occur because control operations of the route control servers do not synchronize.

For this reason, the network traffic capacity decreases in some areas, and the effect of route control in other areas is lost.

In an MPLS (Multiprotocol Label Switching) network or optical GMPLS (Generalized Multiprotocol Label Switching) network which are becoming popular in recent years, when the route control server sets a path with an explicitly designated communication quality between routers, path setting may be impossible in some areas so no end-to-end communication quality can be ensured.

The present invention has been made to solve the above-described problems, and has as its object to provide a packet communication network, route control server, route control method, and program which can execute appropriate route control in the entire network for a packet which passes through a plurality of areas.

The above-described optical wavelength path control techniques cannot implement a band-guarantee-type network which can flexibly expand the communication capacity in accordance with a user request.

More specifically, according to the former of the above-described optical wavelength path control techniques, the optical wavelength path resource is assigned in consideration of only traffic demand between packet transfer apparatuses. Hence, it is difficult to cope with a band guarantee request from a specific user. According to the latter of the above-described optical wavelength path control techniques, data transfer is impossible when a user request is rejected.

The present invention has been made to solve the above-described problems, and has as its object to provide a packet communication network, packet transfer apparatus, and admission control server which can implement a network service capable of guaranteeing a band in accordance with a user request by using a photonic network.

### Means of Solution to the Problems

In order to achieve the above-described objects, a packet communication network according to the present invention comprises a plurality of routers which are connected in a network form through communication links, and a plurality of route control servers each of which is arranged in one of areas provided by dividing the packet communication network and controls the router in the area, wherein the route control server comprises a destination information acquisition unit which acquires destination information of a packet from header information of the packet, the header information being sent from the router in the area, a route control unit which generates inter-server information containing the destination information acquired by the destination information acquisition unit and transfer management information made to correspond to the destination information in advance, an inter-server information transmission/reception unit which transmits/receives the inter-server information to/from another route control server, and a packet control unit which determines an output interface of the packet in the router on the basis of the destination information and transfer management information and determines the output interface of the packet on the basis of destination information and transfer management information contained in inter-server information from another route control server, and the router comprises a header information acquisition unit which acquires the header information from the arrival packet and notifies the route control server of the acquired header information, and an output interface control unit which outputs the arrival packet from the output interface corresponding to the packet to a communication link connected to the output interface on the basis of the determination in the route control server.

Another packet communication network according to the present invention comprises a plurality of packet transfer apparatuses each of which stores a plurality of user terminals, is connected to an optical wavelength path of a photonic network including a transmission link having an optical wavelength path multiplex transmission function and a wavelength switch having an optical wavelength path switching function, encapsulates, in a lower layer frame, an upper layer packet received from one of a user network which stores a transmission source user terminal and an external network which stores the transmission source user terminal and transfers the lower layer frame, in transmitting the lower layer frame to the external network, transfers the lower layer frame after decapsulating the lower layer frame to the upper layer packet, and executes mutual conversion and transfer of an upper layer packet on a side of a user terminal corresponding to an upper layer packet address and a lower layer frame on a side of an optical wavelength path corresponding to a lower layer frame address on the basis of an address management table which manages correspondence between the upper layer packet address and the destination lower layer frame address, an admission control server which sets, of optical wavelength paths of the photonic network, an optical wavelength path to connect packet transfer apparatuses of transmission source and destination in accordance with an optical wavelength path connection request received from the transmission source user terminal through the packet transfer apparatus, and a frame transfer apparatus which is connected to the optical wavelength path of the photonic network to receive the lower layer frame from the transmission source packet transfer apparatus and transfer the lower layer frame to a packet transfer apparatus corresponding to the upper layer packet address of the upper layer packet in the lower layer frame, wherein the admission control server comprises a route setting function unit which, in setting the optical wavelength path, registers correspondence between the upper layer packet address of the user terminal and the lower layer frame address corresponding to the optical wavelength path in the address management tables of the packet transfer apparatuses of the transmission source and destination, sets, between the packet transfer apparatuses of the transmission source and destination, an optical wavelength path formed from a cut-through optical wavelength path which has a guaranteed band and passes through only at least one wavelength switch when a band guarantee request is present, and sets an optical wavelength path which connects the packet transfer apparatuses of the transmission source and destination through the frame transfer apparatus when no band guarantee request is present.

### Effect of the Invention

According to the present invention, the route control server to manage the router in each area can execute route control based on transfer management information for a packet having destination information on the basis of inter-server information sent from another route control server. Hence, even for a packet which passes through a plurality of areas managed by different route control servers, packet transfer control can unitedly be done by the route management route control servers so that appropriate route control can be implemented in the entire network.

When the route control servers which manage the areas execute route control independently, the network carrying efficiency may decrease due to disunity of packet management control in some areas, or the network load may be unbalanced by packet concentration to a boundary router that connects the areas. However, these problems can be avoided, and the network resources can be used more efficiently.

In setting a path with an explicitly designated communication quality between routers, even when a packet passes through areas controlled by a plurality of route control servers, an end-to-end communication quality can be ensured.

According to the present invention, an optical wavelength path which can exclusively be used by the user is set between specific user terminals, i.e., the packet transfer apparatuses of transmission source and destination in accordance with a band guarantee request from the user while utilizing the existing photonic network. For this reason, the communication capacity can flexibly be expanded, and a band-guarantee-type network service can be provided.

When no band guarantee request is present, an optical wavelength path which passes through the frame transfer apparatus is set between the packet transfer apparatuses of the transmission source and destination. Since the transfer resources of IP transfer routes are shared, the cost of transfer resource acquisition can be reduced while ensuring reachability of communication. In addition, scalability can be increased.

### Brief Description of Drawings

Fig. 1 is a block diagram showing the arrangement of a packet communication system according to the first embodiment of the present invention;
Fig. 2 is a functional block diagram showing the functional arrangements of route control servers and routers according to the first embodiment of the present invention;
Fig. 3 is a view showing an example of the structure of area information of the route control server;
Fig. 4 is a view showing an example of the structure of routing information of the route control server;
Fig. 5 is a view showing an example of the structure of packet information of the route control server;
Fig. 6 is a flowchart showing route control processing in the route control server according to the first embodiment of the present invention;
Fig. 7 is an explanatory view showing the route control operation in the packet communication network;
Fig. 8 is a flowchart showing inter-server information processing in the route control server according to the first embodiment of the present invention;
Fig. 9 is a view showing an example of the structure of output I/F information;
Fig. 10 is a view showing an example of the structure of intra-area routing information;
Fig. 11 is a block diagram showing the network model of a communication network according to the second embodiment of the present invention;
Fig. 12 is a block diagram showing an example of the network arrangement of the communication network according to the second embodiment of the present invention;
Fig. 13 is a block diagram showing the arrangement of a packet transfer apparatus installed in the communication network according to the second embodiment of the present invention;
Fig. 14 is a block diagram showing the arrangement of an admission control server installed in the communication network according to the second embodiment of the present invention;
Fig. 15 is a view showing an example of the structure of the address management table of the packet transfer apparatus;
Fig. 16 is a view showing another example of the structure of the address management table of the packet transfer apparatus;
Fig. 17 is a view showing an example of the structure of the IPv4 transfer table of the packet transfer apparatus;
Fig. 18 is a view showing an example of the structure of the destination packet transfer apparatus specifying table of the admission control server;
Fig. 19 is a block diagram showing an example of initial environment of the communication network according to the second embodiment of the present invention; and
Fig. 20 is a block diagram showing an example of network environment after an optical wavelength path is assigned in the communication network according to the second embodiment of the present invention.

### Best Mode for Carrying Out the Invention

The embodiments of the present invention will be described next with reference to the accompanying drawings.

### [First Embodiment]

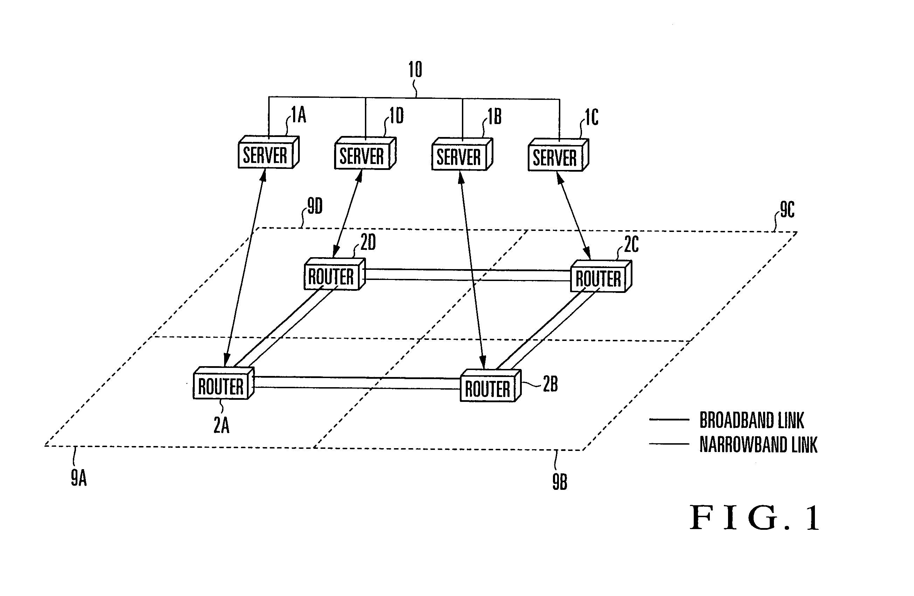

A packet communication network to which a route control server and router according to the first embodiment of the present invention are applied will be described with reference to Fig. 1. Fig. 1 is a block diagram showing the arrangement of a packet communication system to which a route control server and router according to the first embodiment of the present invention are applied.

The packet communication network includes a plurality of route control servers 1 (1A, 1B, 1C, and 1D) and a plurality of routers 2 (2A, 2B, 2C, and 2D).

The route control server 1 is formed from a route control server apparatus implemented by a computer as a whole. The route control server is a control apparatus to determine the transfer destination route of a packet, which has arrived at the router 2, on the basis of its header information.

The router 2 is connected to the remaining routers through communication links and, in this case, broadband communication links or narrowband communication links in a network form. The router 2 is a communication apparatus which notifies the route control server 1 of the header information of the arrival packet and outputs the packet to the communication link of the output I/F determined by the route control server 1.

In the example shown in Fig. 1, the entire network is divided into a plurality of areas 9 (9A, 9B, 9C, and 9D). One or more routers 2 (2A, 2B, 2C, and 2D) are arranged in each area 9. In this example, the routers 2A to 2D are arranged in the areas 9A to 9D, respectively.

The route control servers 1 (1A, 1B, 1C, and 1D) are arranged in the areas 9, respectively. Each route control server 1 is connected to one or more routers 2 arranged in the corresponding area 9 to execute route control of the routers 2.

In this embodiment, in executing route control of a packet which has arrived at the router 2, inter-server information containing the destination information of the packet and transfer management information related to transfer control is exchanged between the route control servers 1. Each route control server 1 executes route control on the basis of the inter-server information.

### [Route Control Server]

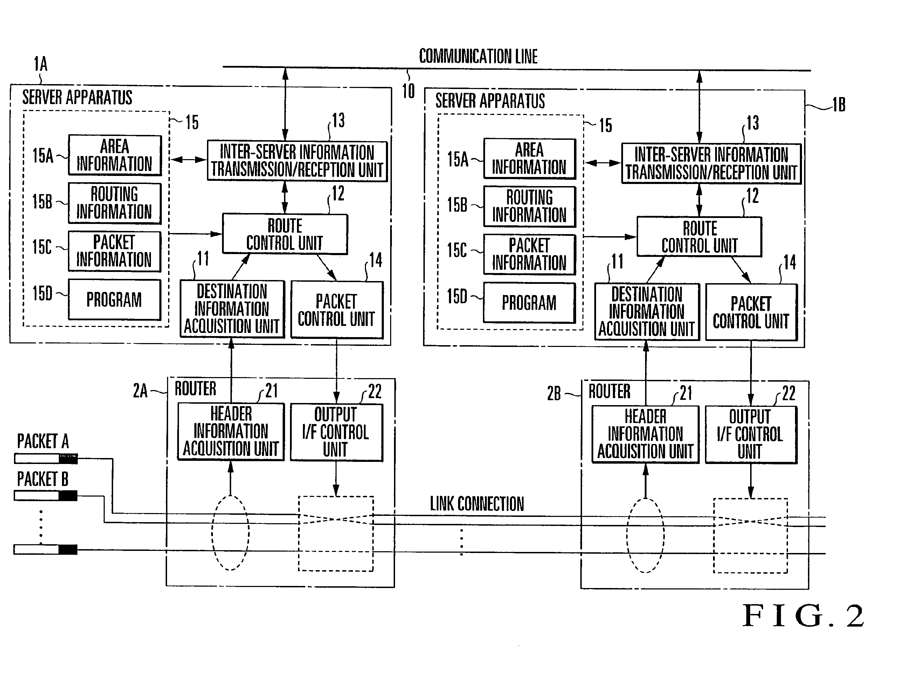

The functional arrangement of the route control server 1 according to this embodiment will be described next with reference to Fig. 2. Fig. 2 is a functional block diagram showing the functional arrangements of the route control servers 1 and routers 2 according to this embodiment. Fig. 2 illustrates only the route control servers 1A and 1B and routers 2A and 2B. The remaining route control servers 1C and 1D and routers 2C and 2D also have the same arrangement as in Fig. 2.

The route control server 1 is formed from a route control server apparatus including a computer as a whole. The route control server comprises, as physical components (not shown), a control unit, storage unit, and communication interface unit.

The control unit has a microprocessor such as a CPU and its peripheral circuits. The control unit implements various kinds of function units by reading out and executing a program stored in the storage unit in advance and making the hardware and program cooperate. Examples of the function units are a destination information acquisition unit 11, route control unit 12, inter-server information transmission/reception unit 13, and packet control unit 14.

The destination information acquisition unit 11 is a function unit which acquires the header information of a packet which has arrived at the router 2 and outputs the destination information of the packet.

The route control unit 12 is a function unit which generates inter-server information containing destination information from the destination information acquisition unit 11 and transfer management information made to correspond to the destination information in advance.

The inter-server information transmission/reception unit 13 is a function unit which transmits/receives inter-server information to/from another route control server 1 through a communication line 10.

The packet control unit 14 is a function unit which determines an output interface (to be referred to as an output I/F hereinafter) to transfer the packet on the basis of the destination information and transfer management information from the route control unit 12.

A storage unit 15 is formed from a storage device such as a hard disk or memory and stores process information necessary for processing by the control unit and a program 15D to be executed by the control unit. The program 15D is received from the communication line or recording medium and stored in the storage unit 15 in advance.

Examples of process information are area information 15A to manage the route control server 1 and router 2 installed in each area 9, routing information 15B to manage an area through which a packet passes for each destination router of a packet, and packet information 15C to manage control contents for a packet for each destination address of a packet.

### [Router]

The functional arrangement of the router 2 according to this embodiment will be described next with reference to Fig. 2.

The router 2 is formed from a communication apparatus including a computer or dedicated chip as a whole. The router comprises, as function units, a header information acquisition unit 21 and output interface control unit (to be referred to as an output I/F control unit hereinafter) 22.

The header information acquisition unit 21 is a function unit which acquires header information of a packet which has arrived from a packet transmission apparatus (not shown) or another router and notifies the route control server 1 which manages the area of the header information.

The output I/F control unit 22 is a function unit which outputs each packet to a predetermined output interface on the basis of output I/F information sent from the route control server 1, thereby transferring the packet to the router of the transfer destination through a corresponding communication link.

### [Process Information]

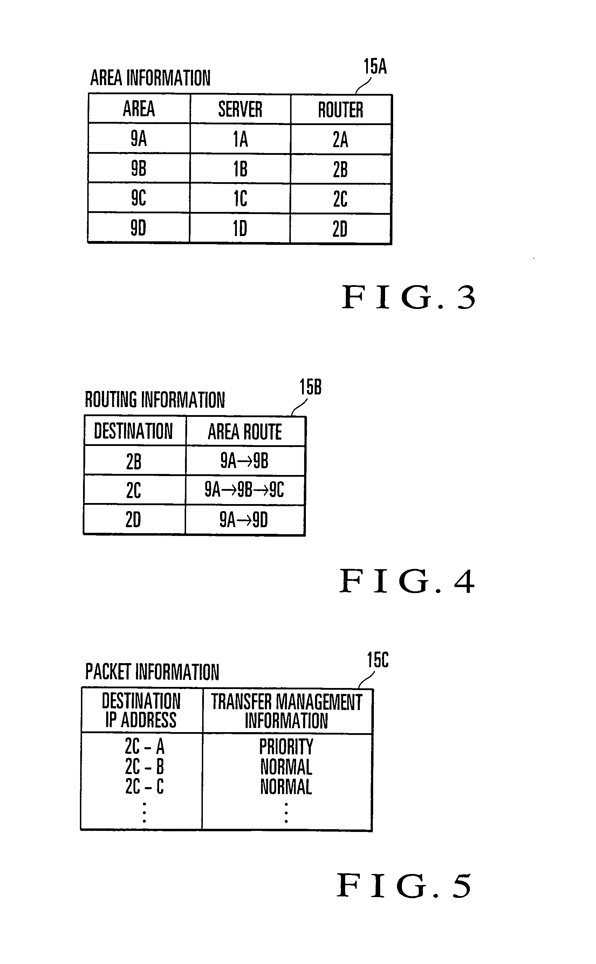

Process information used in the route control server 1 will be described next with reference to Figs. 3 to 5.

The area information 15A will be described with reference to Fig. 3. Fig. 3 shows an example of the structure of the area information 15A. The area information 15A manages the route control server 1 and router 2 installed in each area 9. In the example shown in Fig. 3, the route control server "1A" is made to correspond as the route control server which manages the area "9A". In addition, the router "2A" is made to correspond as the router installed in the area "9A".

The routing information 15B will be described with reference to Fig. 4. Fig. 4 shows an example of the structure of the routing information 15B. The routing information 15B manages an area through which a packet passes for each destination router of a packet. In the example shown in Fig. 4, areas "9A → 9B → 9C" are made to correspond as an area path through which a packet to the destination router "2C" passes.

The packet information 15C will be described with reference to Fig. 5. Fig. 5 shows an example of the structure of the packet information 15C. The packet information 15C manages transfer control contents for a packet for each destination address of a packet. In the example shown in Fig. 5, "priority" is made to correspond as transfer management information of a packet having a destination IP address "2A-A" (indicating address A of the router 2A) so that transfer control of the packet has priority over a packet having transfer management information "normal".

### [Route Control Operation]

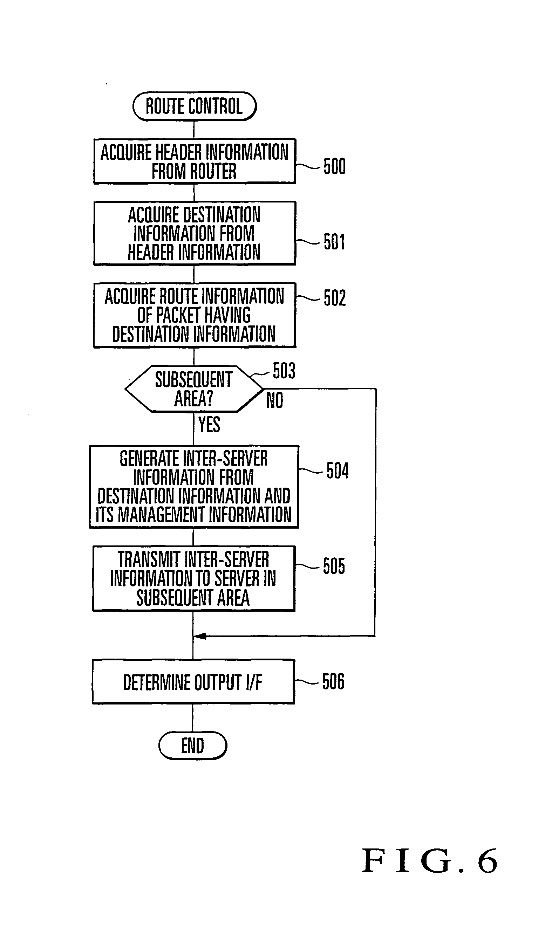

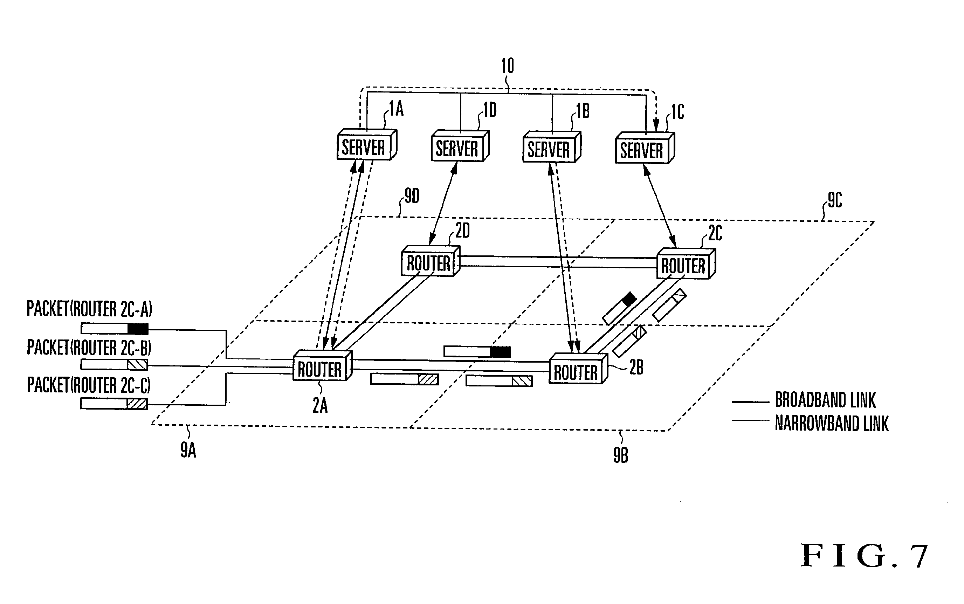

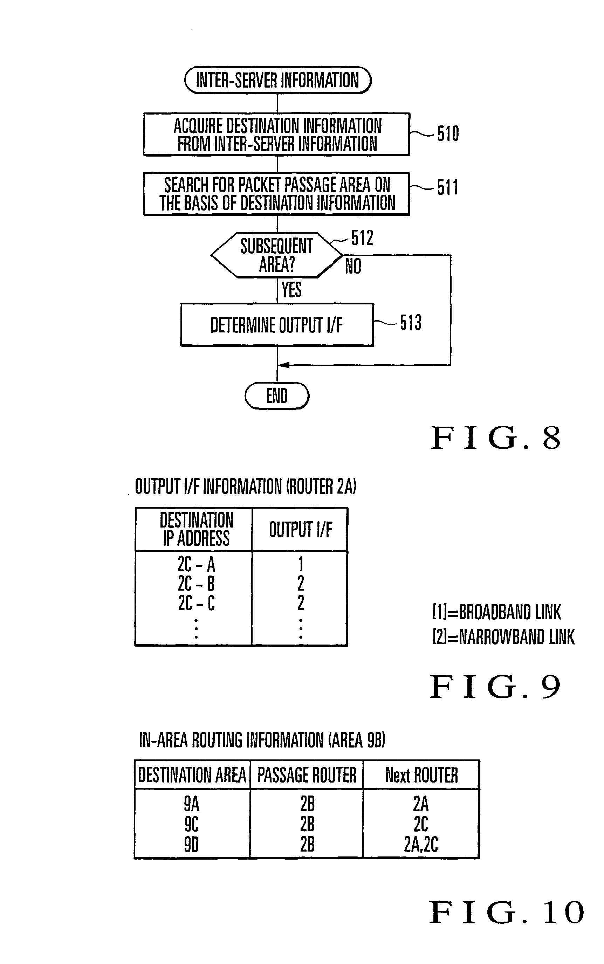

The route control operation in the route control server 1 will be described next with reference to Figs. 6, 7, and 8. Fig. 6 is a flowchart showing the route control operation in the route control server 1. Fig. 7 is an explanatory view showing the route control operation in the packet communication network. Fig. 8 is a flowchart showing the inter-server information processing operation in the route control server 1.

An example will be described below in which a packet which has arrived at the router 2A in the area 9A is transferred to the router 2C in the area 9C through the router 2B in the area 9B.

In the router 2A, in accordance with arrival of a packet to the router 2C, the header information acquisition unit 21 extracts header information from the packet. If no output I/F is made to correspond to the packet, the header information is sent to the route control server 1A which manages the area 9A.

The destination information acquisition unit 11 of the route control server 1A acquires the header information sent from the router 2A (step 500) and acquires, from the header information, the destination information of the packet and, in this case, a destination IP address "2C-A" (step 501).

The route control unit 12 acquires route information corresponding to the destination information acquired by the destination information acquisition unit 11 by referring to the routing information 15B (step 502). In this case, "9A → 9B → 9C" is acquired as the area path corresponding to the destination router "2C" of the destination IP address "2C-A".

It is determined whether a subsequent area except the area "9A" managed by the route control server 1A is present on the area path (step 503). If no subsequent area is present (NO in step 503), the flow advances to step 506 (to be described later).

If a subsequent area is present (YES in step 503), the route control unit 12 generates inter-server information containing inter-server information including the destination IP address "2C-A" and its transfer management information "priority" read out from the packet information 15C (step 504).

The inter-server information transmission/reception unit 13 confirms the route control servers "1B and 1C" which respectively manage the subsequent areas "9B and 9C" included in the area path by referring to the area information 15A and transmits the inter-server information to the route control servers "1C and 1D" through the communication line 10 (step 505).

On the basis of the inter-server information, i.e., destination information and transfer management information obtained by the route control unit 12, the packet control unit 14 determines the output I/F corresponding to the packet having the destination information, generates output I/F information to set the correspondence between the destination IP address and the output I/F (step 506), and ends the series of route control processes. Since the transfer management information of the destination IP address "2C-A" indicates "priority", "1" is set as an output I/F corresponding to a broadband communication link as the output communication link for the router 2B.

The output I/F information determined in this way is sent from the packet control unit 14 to the router 2A. On the basis of the output I/F information, the output I/F control unit 22 transfers each arrival packet from the corresponding output I/F to the communication link. Hence, the packet having the destination IP address "2C-A" is transferred from the output I/F "1" to the router 2B through the broadband communication link.

In the route control server 1B in the area 9B, the inter-server information transmission/reception unit 13 receives the inter-server information from the route control server 1A through the communication line 10 and starts inter-server information processing shown in Fig. 8.

The route control unit 12 acquires destination information and, in this case, destination IP address "2C-A" from the received inter-server information (step 510) and acquires "9B → 9C" as the area path corresponding to the destination router 2C of the destination IP address "2C-A" by referring to the routing information 15B (step 511).

It is determined whether a subsequent area except the area "9B" managed by the route control server 1B is present on the area path (step 512). If no subsequent area is present (NO in step 512), the series of inter-server information processes is ended because packet transfer processing for a subsequent area need not be executed.

If a subsequent area is present (YES in step 512), to set a communication link for the subsequent area, the output I/F of the packet is determined on the basis of the destination information and transfer management information notified by the inter-server information. Output I/F information is generated, and the series of inter-server information processes is ended. In this case, since the transfer management information indicates "priority", an output I/F corresponding to a broadband communication link is set as the output communication link for the router 2C of the packet having the destination IP address "2C-A".

At this time, the route control server 1B discriminates the destination area of the packet on the basis of the destination information notified by the inter-server information and selects the router in the area of its own, through which the packet passes, on the basis of intra-area routing information shown in Fig. 10, which is set in the storage unit 15 in advance. In this example, since the destination area is "9C", the router "2B" corresponding to this area is selected as the pass router. In addition, since the router "2C" is made to correspond to the destination area "9C" as the Next router, of the links from the router "2B" to the router "2C", a communication link corresponding to the transfer management information is selected, and its output I/F is set for the pass router "2C".

When a plurality of Next routers are present, one Next router is selected by a certain method. Examples of the selection method are (1) a router is selected at random, (2) the number of times of selection of each router is stored, and a router with a minimum number of times of selection is selected, (3) a router with a minimum transfer load or CPU load is selected, and (4) a router with a minimum traffic transfer amount of the link to the router is selected.

The output I/F information determined in this way is sent from the packet control unit 14 of the route control server 1B to the router 2B. On the basis of the output I/F information, the output I/F control unit 22 outputs each arrival packet from the corresponding output I/F to the communication link. Hence, the packet having the destination IP address "2C-A" is transferred from the output I/F "1" to the router 2C through the broadband communication link.

In the route control server 1C in the area 9C as well, inter-server information processing shown in Fig. 8 is started, as in the route control server 1B. At this time, the route control server 1C is the destination area of the packet having the destination IP address "2C-A", and no subsequent area of the area "9C" is present on the area path corresponding to the destination router "2C" (NO in step 512). Hence, the series of inter-server information processes is ended without executing packet transfer processing for a subsequent area.

Hence, when the route control server 1A has the packet information 15C shown in Fig. 5, for, of packets which have arrived at the router 2A, a packet whose destination IP address indicates "2C-A", the transfer management information "priority" is sent to the route control servers 1C and 1D through the communication line 10, as shown in Fig. 7. The packet is transferred from the router 2A to the router 2B through a broadband communication link and then from the router 2B to the router 2C through a broadband communication link.

For a packet whose destination IP address indicates "2C-B" or "2C-C", the transfer management information "normal" is sent to the route control servers 1C and 1D through the communication line 10. The packet is transferred from the router 2A to the router 2B through a narrowband communication link and then from the router 2B to the router 2C through a narrowband communication link.

As described above, in the route control server 1 which manages each area, the destination information in the header information and corresponding transfer management information, which are sent from the router 2 in the area, are sent to another route control server as inter-server information. The route control server which has received the inter-server information can execute route control based on the transfer management information for a packet having the destination information on the basis of the inter-server information.

Even for a packet which passes through a plurality of areas managed by different route control servers, packet transfer control can unitedly be done by the route management route control servers so that appropriate route control can be implemented in the entire network.

When the route control servers which manage the areas execute route control independently, the network carrying efficiency may decrease due to disunity of packet management control in some areas, or the network load may be unbalanced by packet concentration to a boundary router that connects the areas. However, these problems can be avoided, and the network resources can be used more efficiently.

In setting a path with an explicitly designated communication quality between routers, even when a packet passes through areas controlled by a plurality of route control servers, an end-to-end communication quality can be ensured.

In the above description, four route control servers 1, four routers 2, and four areas 9 are used. However, the number need not always be 4 and can appropriately be changed without departing from the spirit and scope of the present invention.

As the transfer management information, priority of transfer processing in the router for a packet having arbitrary destination information is used. However, the present invention is not limited to this. Information which needs to select an output interface for a packet managed by destination information and, for example, information about the communication quality required by the user, such as the communication band size (transfer rate) of a packet, may be used as transfer management information.

In the above description, inter-server information is transferred from the first route control server 1A to both the route control servers 1B and 1C which manage subsequent areas. However, the present invention is not limited to this. For example, inter-server information may be transmitted to only the route control server 1B in the area located midway on the area path. In this case, processing in the last route control server 1C can be omitted. Alternatively, the first route control server 1A transmits route control server management information to only the route control server 1B which manages the next subsequent area. The route control server 1B located midway may sequentially transfer the received inter-server information to the route control server 1C in the next area between, e.g., step 512 and step 513 in Fig. 7.

Inter-server information needs to contain at least packet destination information and its transfer management information such as the transfer priority or communication band size. Inter-server information may contain transmission source information in addition to packet destination information and its transfer management information. In this case, control can be executed for each flow. More specifically, in IP transfer, control can be executed for each flow by inserting, in inter-server information, source and destination IP addresses and DSCP (Differentiated Service Code Point) value or a packet amount contained in a flow defined by the set of source and destination IP addresses.

Inter-server information may contain label source information in addition to packet destination information and its transfer management information. More specifically, in MPLS transfer, control can be executed for each label by inserting, in inter-server information, destination information of LSP (Label Switching Path) and its transfer management information (e.g., transfer priority or communication band size) as label information. In WDM (Wavelength Division Multiplexing) transfer, control can be executed for each wavelength path by inserting, in inter-server information, destination information of a wavelength path in addition to packet destination information and its transfer management information.

### [Second Embodiment]

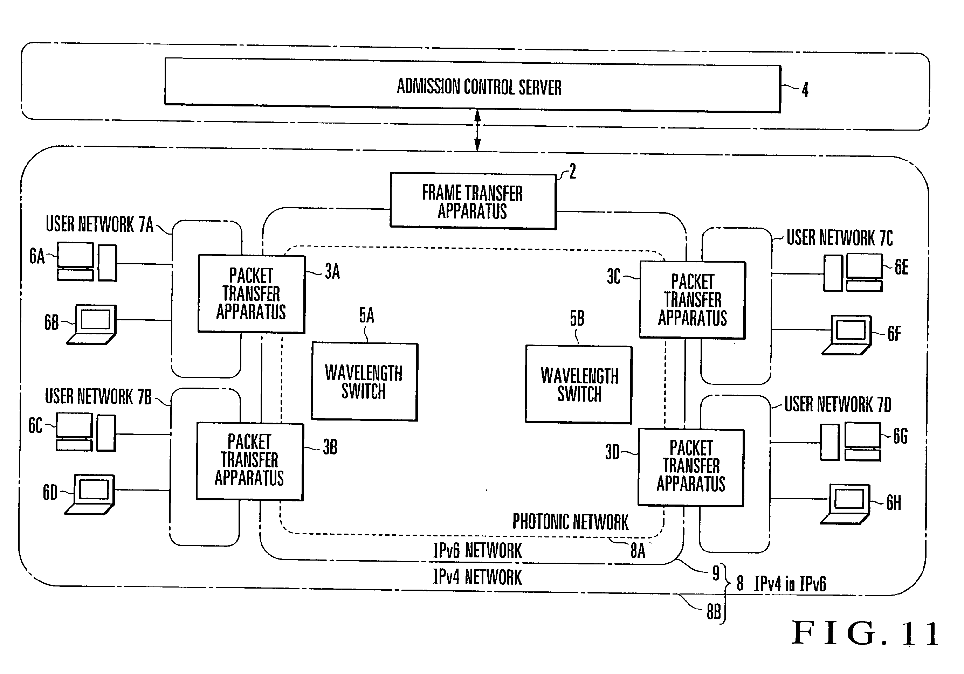

A communication network according to the second embodiment of the present invention will be described with reference to Fig. 11. Fig. 11 is a block diagram showing the network model of the communication network according to the second embodiment of the present invention.

This communication network assumes a photonic network 8A as a connection network and an IPv4 in IPv6 network 8 as a connectionless network.

The photonic network 8A employs a wavelength switch as a connection switching device. In the IPv4 in IPv6 network 8, the lower layer includes an IPv6 network 9. An IPv6 frame is applied as the lower layer frame. The upper layer includes an IPv4 network 8B. An IPv4 packet is applied as the upper layer packet. The IPv6 network 9 corresponds to the cell 9 (9A to 9D) in the first embodiment.

In the communication network shown in Fig. 11, packet transfer apparatuses 3 (3A, 3B, 3C, and 3D), frame transfer apparatus 2, wavelength switches 5A and 5B, and admission control server 4 are provided.

The packet transfer apparatus 3 is a PE (Provider Edge) router which stores a plurality of user terminals. The packet transfer apparatus 3 is connected to the optical wavelength paths of the photonic network 8A to execute conversion and transfer of an IPv4 packet on the side of a user terminal corresponding to an IPv4 packet address and an IPv6 frame on the side of an optical wavelength path corresponding to an IPv6 frame address on the basis of an address management table which manages correspondence between the IPv4 packet address and the IPv6 frame address.

The frame transfer apparatus 2 corresponds to the router 2, i.e., an electric P (Provider) router in the above-described first embodiment. The frame transfer apparatus 2 is connected to the optical wavelength paths of the photonic network 8A to receive an IPv6 frame from the transmission source packet transfer apparatus 3 and transfer it to the destination packet transfer apparatus 3 corresponding to the IPv4 packet address in the IPv6 frame.

Each of the wavelength switches 5A and 5B is an optical P (Provider) router formed from, e.g., OXC (Optical Cross-Connect). The wavelength switches 5A and 5B are arranged in the photonic network 8A to switch and connect the optical wavelength paths.

The admission control server 4 sets, of the optical wavelength paths of the photonic network 8A, an optical wavelength path which connects the packet transfer apparatuses 3 of the transmission source and destination in accordance with an optical wavelength path connection request received from a transmission source user terminal through the packet transfer apparatus 3.

Referring to Fig. 11, the packet transfer apparatus 3A stores user terminals 6A and 6B through a user network 7A. The packet transfer apparatus 3B stores user terminals 6C and 6D through a user network 7B. The packet transfer apparatus 3C stores user terminals 6E and 6F through a user network 7C. The packet transfer apparatus 3D stores user terminals 6G and 6H through a user network 7D.

In the communication network according to this embodiment, the packet transfer apparatuses 3 having an IP transfer function as terminal apparatuses are installed in the photonic network 8A which comprises transmission links having an optical wavelength path multiplex transmission function and wavelength switches having an optical wavelength path switching function. In addition, IP transfer packet commutation terminals are installed as user terminals. By causing the packet transfer apparatuses 3 to store a plurality of user terminals, a logical IP network is built on the photonic network 8A.

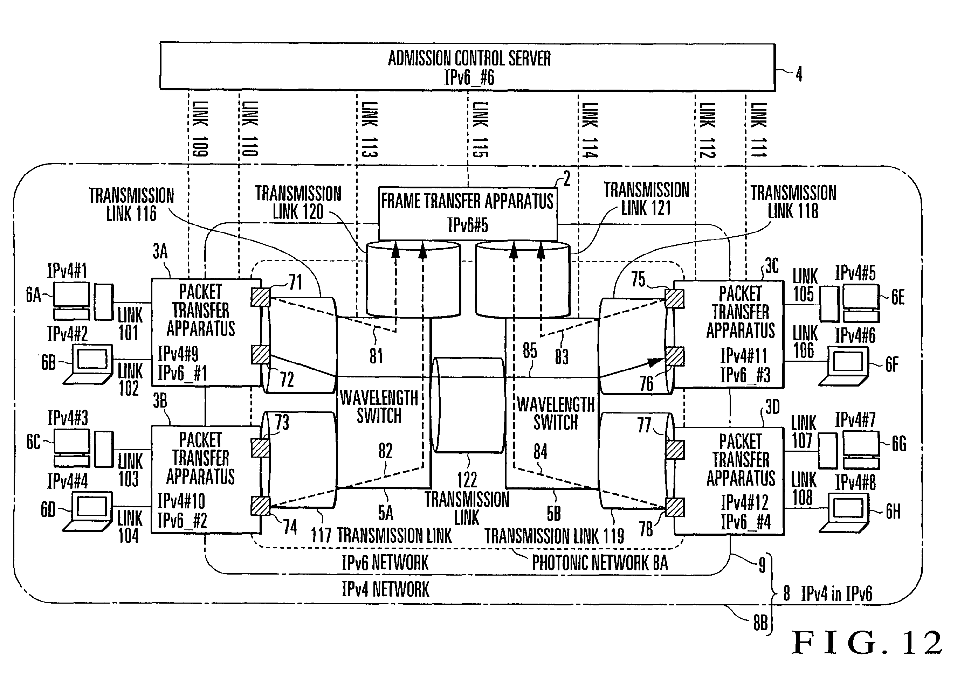

A detailed arrangement of the communication network according to this embodiment will be described next with reference to Fig. 12. Fig. 12 shows an example of the network arrangement of the communication network according to this embodiment.

The packet transfer apparatus 3A stores the user terminals 6A and 6B by links 101 and 102 and is connected to the wavelength switch 5A through a transmission link 116. The packet transfer apparatus 3B stores the user terminals 6C and 6D by links 103 and 104 and is connected to the wavelength switch 5A through a transmission link 117.

The packet transfer apparatus 3C stores the user terminals 6E and 6F by links 105 and 106 and is connected to the wavelength switch 5B through a transmission link 118. The packet transfer apparatus 3D stores the user terminals 6G and 6H by links 107 and 108 and is connected to the wavelength switch 5B through a transmission link 119.

The frame transfer apparatus 2 is connected to the wavelength switches 5A and 5B through transmission links 120 and 121. The wavelength switches 5A and 5B are connected through a transmission link 122.

The admission control server 4 is connected to the packet transfer apparatuses 3A to 3D through links 109 to 112, to the wavelength switches 5A and 5B through links 113 and 114, and to the frame transfer apparatus 2 through a link 115.

The user terminal 6A is identified by address: IPv4#1. The user terminal 6B is identified by address: IPv4#2. The user terminal 6C is identified by address: IPv4#3. The user terminal 6D is identified by address: IPv4#4. The user terminal 6E is identified by address: IPv4#5. The user terminal 6F is identified by address: IPv4#6. The user terminal 6G is identified by address: IPv4#7. The user terminal 6H is identified by address: IPv4#8.

The packet transfer apparatus 3A is identified by address: IPv4#9 and address prefix: IPv6_#1. The packet transfer apparatus 3B is identified by address: IPv4#10 and address prefix: IPv6_#2.

The packet transfer apparatus 3C is identified by address: IPv4#U and address prefix: IPv6_#3. The packet transfer apparatus 3D is identified by address: IPv4#12 and address prefix: IPv6_#4.

The frame transfer apparatus 2 is identified by IPv6#5.

For the packet transfer apparatuses 3A to 3D and frame transfer apparatus 2, optical wavelength paths 81 to 84 are arranged as connections. The optical wavelength paths to connect the packet transfer apparatuses and frame transfer apparatus will be referred to as default optical wavelength paths.

The packet transfer apparatuses 3A to 3D terminate the optical wavelength paths. The optical wavelength paths are identified by adding optical wavelength path identifiers 71 to 78 to optical wavelength path terminal interfaces.

### [Outline of Packet Transfer Operation]

The outline of the packet transfer operation of the communication network according to this embodiment will be described next with reference to Fig. 12 described above.

In this communication network, for example, the user terminal 6A under the packet transfer apparatus 3A exchanges an IPv4 packet with a user terminal under another packet transfer apparatus, and for example, the user terminal 6E under the packet transfer apparatus 3B.

An IPv4 packet transmitted from the user terminal 6A is encapsulated in an IPv6 packet by the packet transfer apparatus 3A and transferred to the frame transfer apparatus 2 or packet transfer apparatus 3C through optical wavelength paths on the photonic network 8A in accordance with the IPv6 transfer table and IPv4 transfer table in the packet transfer apparatus 3A.

The frame transfer apparatus 2 confirms the header of the IPv6 packet received from an optical wavelength path and outputs the IPv6 packet to another optical wavelength path in accordance with the IPv6 transfer table.

The destination packet transfer apparatus 3C extracts the IPv4 packet from the received IPv6 packet, confirms the header of the IPv4 packet, and transfers the IPv4 packet to the destination user terminal 6E.

When a band guarantee request from the user is received, the admission control server 4 sets a cut-through optical wavelength path to transfer the IPv6 packet directly from the transmission source packet transfer apparatus to the destination packet transfer apparatus without making the frame transfer apparatus 2 intervene. In the arrangement example shown in Fig. 12, the optical wavelength path 83 is arranged between the packet transfer apparatus 3A and the packet transfer apparatus 3C as a cut-through optical wavelength path.

When no band guarantee request is received from the user, an optical wavelength path to transfer the IPv6 packet indirectly from the transmission source packet transfer apparatus to the destination packet transfer apparatus through the frame transfer apparatus 2 is set.

As described above, the communication network according to this embodiment includes the IP network logically built on the photonic network which comprises transmission links having the optical wavelength path multiplex transmission function and wavelength switches having the optical wavelength path switching function.

As the terminal apparatuses of the photonic network, a plurality of packet transfer apparatuses are arranged, each of which stores a plurality of user terminals and is connected to the optical wavelength paths of the photonic network. The admission control server dynamically sets an optical wavelength path between packet transfer apparatuses of the transmission source and destination in accordance with the presence/absence of a band guarantee request from the user.

### [Packet Transfer Apparatus]

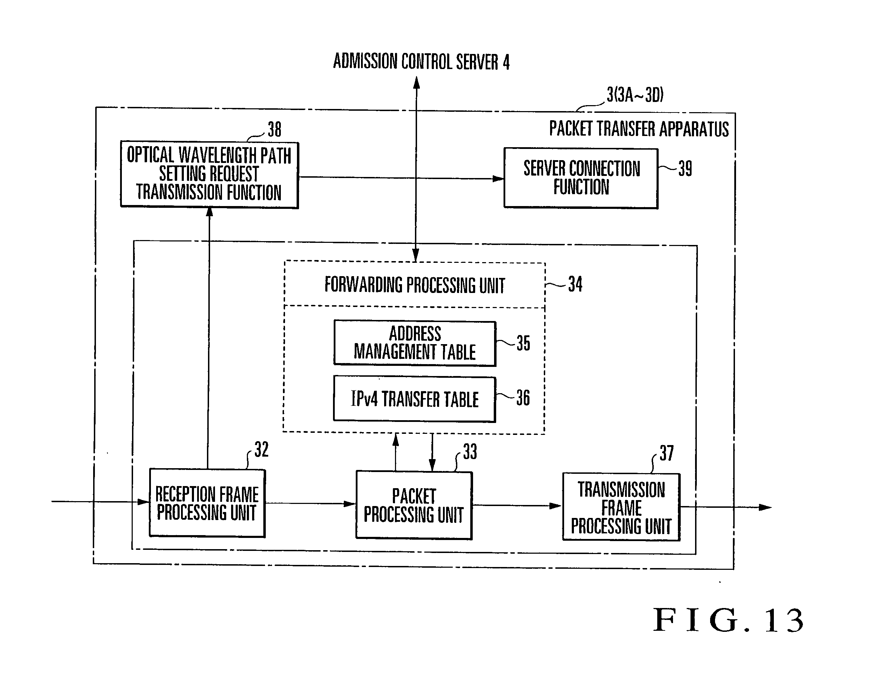

The packet transfer apparatuses 3A to 3D installed in the communication network according to this embodiment will be described next with reference to Fig. 13. Fig. 13 is a block diagram showing the arrangement of each of the packet transfer apparatuses 3A to 3D installed in the communication network according to this embodiment.

Each of the packet transfer apparatuses 3A to 3D comprises a reception frame processing unit 32, packet processing unit 33, forwarding processing unit 34, transmission frame processing unit 37, optical wavelength path setting request transmission function unit 38, and server connection function unit 39.

The reception frame processing unit 32 has a function of transferring a received IPv4 packet to the packet processing unit, a function of extracting an IPv4 packet from a received IP in IPv6 packet and transferring the IPv4 packet to the packet processing unit, and a function of, upon receiving an IPv4 packet indicating an optical wavelength path setting request and optical wavelength path release request from the user, transferring the packet to the optical wavelength path setting request transmission function unit 38 (to be described later).

The packet processing unit 33 has a function of extracting a destination IPv4 packet address from the IPv4 packet extracted by the reception frame processing unit 32.

The forwarding processing unit 34 has an address management table 35 and IPv4 transfer table 36.

The address management table 35 has a function of guiding a destination IPv6 packet address corresponding to the destination IPv4 packet address of an IPv4 packet. In the IPv6 packet address, information to identify the destination packet transfer apparatus is described in the prefix part. Information to identify the output destination optical wavelength path for transfer is described in another part.

The IPv4 transfer table 36 has a function of guiding an output link to a user network, which corresponds to the destination IPv4 packet address of an IPv4 packet.

The forwarding processing unit 34 has a function of guiding a destination IPv6 packet address corresponding to a destination IPv4 packet address extracted by the packet processing unit 33, a function of, when no destination IPv6 packet address is detected by searching the address management table 35, guiding an output link to the user network by searching the IPv4 transfer table 36, a function of, upon receiving an SNMP (Simple Network Management Protocol) reference request from the admission control server 4, generating an SNMP reference response which describes information of the address management table 35 for the admission control server 4 of the transmission source and transferring the SNMP reference response to the server connection function unit 39, and a function of, upon receiving an SNMP setting request, rewriting the address management table 35 in accordance with information of the SNMP setting request, generating an SNMP setting response for the admission control server 4 of the transmission source, and transferring the SNMP setting response to the server connection function unit 39.

The transmission frame processing unit 37 has a function of, when a destination IPv6 packet address for an IPv4 packet extracted by the reception frame processing unit 32 is solved by the forwarding processing unit 34, generating a transmission source IPv6 packet address from the IPv6 packet address prefix held by the packet transfer apparatus itself and an optical wavelength path identifier held by the destination IPv6 packet address and encapsulating the IPv4 packet in an IP in IPv6 packet, a function of outputting the encapsulated IP in IPv6 packet to the optical wavelength path described in the destination IPv6 packet address, and a function of transferring, to the admission control server 4, the SNMP reference response and SNMP setting response generated by the forwarding processing unit 34.

The optical wavelength path setting request transmission function unit 38 has a function of, upon receiving an IPv4 packet indicating an optical wavelength path setting request and optical wavelength path release request from the reception frame processing unit, generating a transmission source IPv6 packet address from the IPv6 packet address prefix held by the packet transfer apparatus itself and the identifier of a link for which connection to the admission control server 4 is ensured, generating a destination IPv6 packet address from the IPv6 packet address prefix held by the admission control server and the identifier of the link for which connection to the admission control server 4 is ensured, encapsulating the IPv4 packet indicating the optical wavelength path setting request and optical wavelength path release request in an IP in IPv6 packet, and transferring the IP in IPv6 packet to the server connection function unit 39.

The server connection function unit 39 has a function of transferring the IP in IPv6 packet received from the optical wavelength path setting request transmission function unit 38 to the admission control server 4 by outputting the IP in IPv6 packet to the link described by the destination IPv6 packet address, a function of, upon receiving the SNMP reference request and SNMP setting request from the admission control server 4, transferring the requests to the forwarding processing unit 34, and a function of transferring, to the admission control server 4, an SNMP reference response and SNMP setting response transferred from the forwarding processing unit 34.

Hence, an optical wavelength path which can exclusively be used by the user can be set between specific user terminals, and the communication capacity can flexibly be expanded.

### [Admission Control Server]

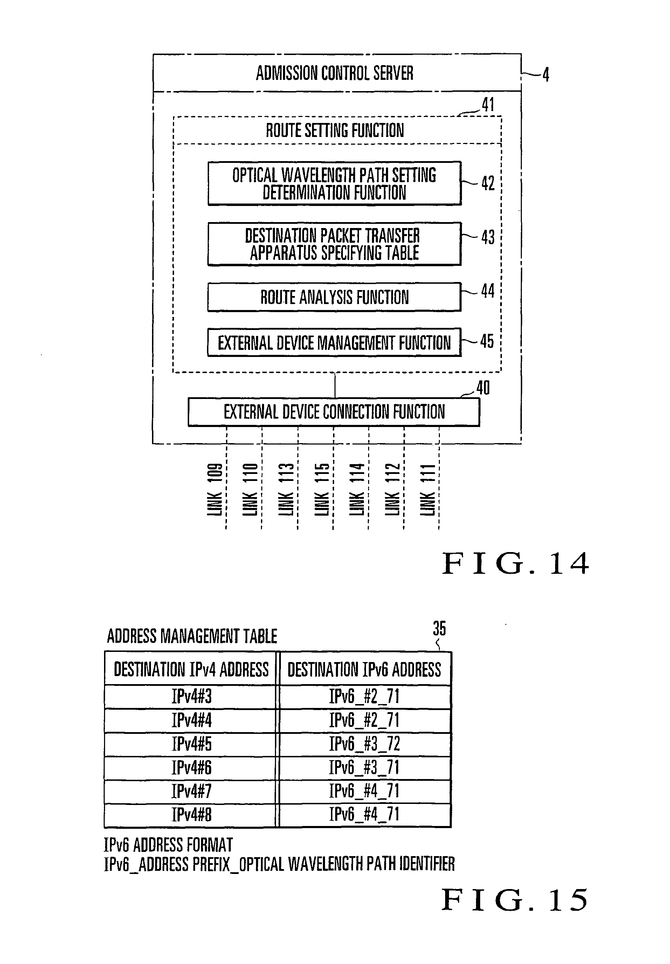

The admission control server 4 installed in the communication network according to this embodiment will be described next with reference to Fig. 14. Fig. 14 is a block diagram showing the arrangement of the admission control server installed in the communication network according to this embodiment.

The admission control server 4 comprises an external device connection function unit 40 and route setting function unit 41.

The external device connection function unit 40 has a function of specifying address information of the packet transfer apparatuses, frame transfer apparatus, and wavelength switches and output link corresponding to the addresses, a function of transferring packets and signals received from the packet transfer apparatuses, frame transfer apparatus, and wavelength switches to the route setting function unit 41, and a function of transferring packets and signals transmitted from the route setting function unit 41 to the packet transfer apparatuses, frame transfer apparatus, and wavelength switches.

The route setting function unit 41 has an optical wavelength path setting determination function unit 42, destination packet transfer apparatus specifying table 43, route analysis function unit 44, and external device management function unit 45.

The optical wavelength path setting determination function unit 42 holds contract user information of the band guarantee service and has a function of determining whether to permit optical wavelength path assignment to a user described in an optical wavelength path connection request.

The destination packet transfer apparatus specifying table 43 has a function of guiding, for a destination IPv4 packet address described in an optical wavelength path connection request, the destination IPv6 packet address prefix of a destination packet transfer apparatus which stores the user terminal which holds the destination IPv4 packet address.

The route analysis function unit 44 has a function of managing route information by storing the resource state of each apparatus in the network.

The external device management function unit 45 has a function of periodically acquiring route information by periodically transmitting an SNMP reference request to the packet transfer apparatuses and frame transfer apparatus and periodically transmitting a signal to the wavelength switches, and a function of changing the route information by transmitting an SNMP setting request (table control packet) to the packet transfer apparatuses and frame transfer apparatus and transmitting a signal to the wavelength switches.

Upon receiving an IP in IPv6 packet which describes an optical wavelength path setting request from the external device connection function unit 40, the route setting function unit 41 determines whether an optical wavelength path can be assigned, by referring to the transmission source IPv4 packet address of the packet by using the optical wavelength path setting determination function unit 42.

If assignment is permitted, the destination IPv6 packet address prefix is specified by referring to the destination IPv4 packet address of the packet by using the destination packet transfer apparatus specifying table 43.

In addition, the packet transfer apparatus to which the optical wavelength path should be assigned is specified by simultaneously referring to the transmission source IPv6 packet address prefix.

The route analysis function unit 44 specifies the optical wavelength path resource to be assigned. The external device management function unit 45 ensures the optical wavelength path resource by changing route information.

At this time, an entry which guides the destination IPv4 packet address or the destination IPv6 packet address prefix and assigned optical wavelength path identifier for the transmission source and destination IPv4 packet addresses is added to the address management table of the packet transfer apparatus. When setting of an optical wavelength path is permitted, the identifier of a cut-through optical wavelength path is described. If optical wavelength path setting is not permitted, the identifier of an optical wavelength path connected to the frame transfer apparatus is described.

When the optical wavelength path resource to be assigned cannot be specified by the route analysis function unit 44, it is determined that optical wavelength path setting is not permitted.

Upon receiving an IP in IPv6 packet which describes an optical wavelength path release request from the external device connection function unit 40, the route setting function unit 41 specifies the destination IPv6 packet address prefix by referring to the destination IPv4 packet address of the packet by using the optical wavelength path setting determination function unit 42 and destination packet transfer apparatus specifying table 43.

The packet transfer apparatus whose optical wavelength path should be released is specified by simultaneously referring to the transmission source IPv6 packet address prefix. The route analysis function unit 44 specifies the optical wavelength path resource to be released. The external device management function unit 45 releases the optical wavelength path resource by changing route information.

After the transmission source packet transfer apparatus and destination packet transfer apparatus are specified in accordance with an optical wavelength path setting request from the user, an optical wavelength path which can exclusively be used by the user is set for a specific destination user terminal or between specific user terminals so that the communication capacity can flexibly be expanded. IP transfer routes passing through the frame transfer apparatus are set for user terminals except the specific user terminals. Hence, reachability of communication can be ensured.

### [Table Structure]

The address management table 35 of the packet transfer apparatus 3A will be described next with reference to Fig. 15. Fig. 15 shows an example of the structure of the address management table 35 of the packet transfer apparatus 3A. An example of the IPv6 packet address format is also shown.

The address management table 35 has a function of guiding a destination IPv6 packet address corresponding to a destination IPv4 packet address.

The IPv6 packet address includes an address prefix and optical wavelength path identifier. For example, an IPv4 packet having IPv4#3 as the destination IPv4 packet address and an IPv4 packet having IPv4#4 as the destination IPv4 packet address are transferred to the packet transfer apparatus 3B identified by IPv6_#2 by using the optical wavelength path identifier 71.

An IPv4 packet having IPv4#5 as the destination IPv4 packet address and an IPv4 packet having IPv4#6 as the destination IPv4 packet address are transferred to the packet transfer apparatus 3C identified by IPv6_#3. However, the different optical wavelength path identifiers 71 and 72 are used for transfer.

Hence, an optical wavelength path which can exclusively be used by the user can be set for only a specific destination user terminal.

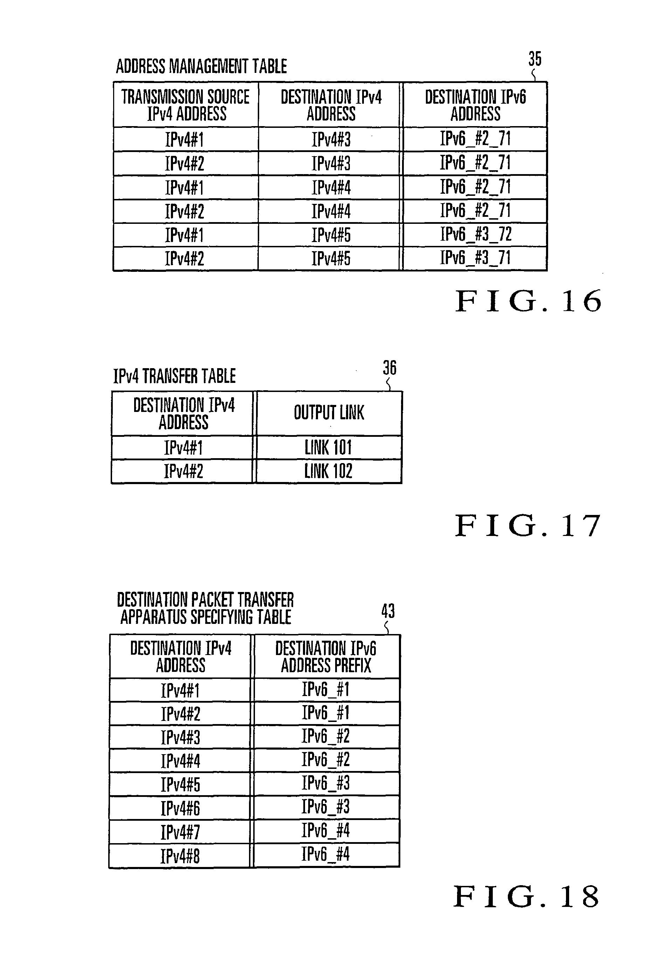

Another structure of the address management table 35 will be described next with reference to Fig. 16. Fig. 16 shows another example of the structure of the address management table 35. In the above-described example shown in Fig. 15, the destination IPv4 packet address and IPv6 packet address are managed in correspondence with each other. In the example shown in Fig. 16, transmission source and destination IPv4 packet addresses and IPv6 packet address are managed in correspondence with each other.

Hence, an optical wavelength path which can exclusively be used by the user can be set only between specific user terminals.

The IPv4 transfer table 36 of the packet transfer apparatus 3A will be described next with reference to Fig. 17. Fig. 17 shows an example of the structure of the IPv4 transfer table 36 of the packet transfer apparatus 3A.

The IPv4 transfer table 36 has a function of guiding an output link for a destination IPv4 packet address.

The destination packet transfer apparatus specifying table 43 of the admission control server 4 will be described next with reference to Fig. 18. Fig. 18 shows an example of the structure of the destination packet transfer apparatus specifying table 43 of the admission control server 4.

The destination packet transfer apparatus specifying table 43 has a function of, for a destination IPv4 packet address described in an optical wavelength path connection request, guiding the destination IPv6 packet address prefix of the destination packet transfer apparatus which stores the user terminal which holds the destination IPv4 packet address.

When an optical wavelength path setting request is received from the user, the transmission source packet transfer apparatus and destination packet transfer apparatus can be specified.

### [Details of Packet Transfer Operation]

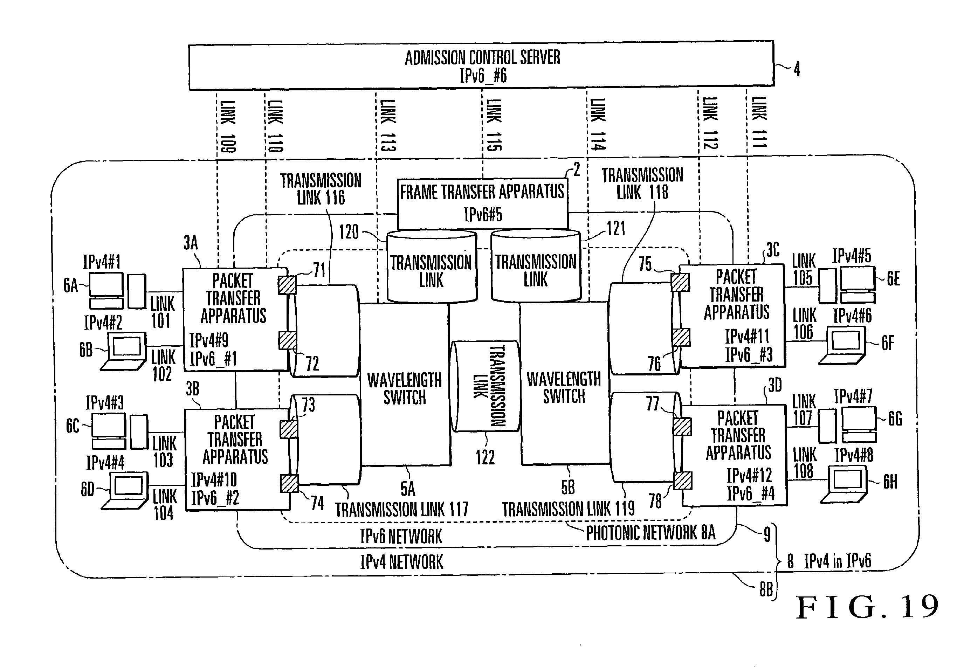

Details of the packet transfer operation of the communication network according to this embodiment will be described next with reference to Fig. 19. Fig. 19 shows an example of initial environment of the communication network according to this embodiment.

An example will be described below in which the user terminal 6A under the packet transfer apparatus 3A communicates with the user terminal 6E under the packet communication apparatus 3, and the user terminal 6B under the packet transfer apparatus 3A communicates with the user terminal 6F under the packet communication apparatus 3.

The user terminal 6A requests band guarantee for communication with the user terminal 6E of the communication network. The user terminal 6B does not request band guarantee for communication with the user terminal 6F of the communication network.

At the start of communication with the user terminal 6E, the user terminal 6A generates and transmits an optical wavelength path setting request packet in which transmission source address: IPv4#1 and destination address: IPv4#5 are described.

In the packet transfer apparatus 3A, the reception frame processing unit 32 receives the optical wavelength path setting request packet from the user terminal 6A. The reception frame processing unit 32 extracts the optical wavelength path setting request packet and transfers it to the optical wavelength path setting request transmission function unit 38.

Upon receiving the optical wavelength path setting request packet, the optical wavelength path setting request transmission function unit 38 generates transmission source IPv6 packet address: IPv6_#1_109 from IPv6 packet address prefix: IPv6_#1 held by the packet transfer apparatus itself and the identifier 109 of the link for which connection to the admission control server 4 is ensured.

The optical wavelength path setting request transmission function unit 38 also generates destination IPv6 packet address: IPv6_#6_109 from IPv6 address prefix: IPv6_#6 held by the admission control server 4 and the identifier 109 of the link for which connection to the admission control server 4 is ensured.

The optical wavelength path setting request transmission function unit 38 encapsulates an IPv4 packet indicating an optical wavelength path setting request and optical wavelength path release request in an IP in IPv6 packet and transfers the packet to the server connection function unit 39.

The server connection function unit 39 transfers the IP in IPv6 packet received from the optical wavelength path setting request transmission function unit 38 to the admission control server 4 by outputting it to the link 109 described in the destination IPv6 address.

The admission control server 4 causes the external device connection function unit 40 to receive the IP in IPv6 packet in which optical wavelength path setting request information is described.

The external device connection function unit 40 transfers the IP in IPv6 packet to the route setting function unit 41.

The route setting function unit 41 decapsulates the received IP in IPv6 packet, detects that the user terminal 6A requests band guarantee, by referring to transmission source IPv4 packet address: IPv4#1 of the packet by using the optical wavelength path setting determination function unit 42, and permits optical wavelength path setting.

Subsequently, the route setting function unit 41 specifies destination IPv6 packet address prefix: IPv6#3 by referring to destination IPv4 packet address: IPv4#5 of the packet by using the destination packet transfer apparatus specifying table 43.

The route setting function unit 41 specifies the transmission source packet transfer apparatus 3A and destination packet transfer apparatus 3C as optical wavelength path assignment targets by simultaneously referring to transmission source IPv6 packet address prefix: IPv6_#1.

The route analysis function unit 44 specifies the optical wavelength path to be assigned. The external device management function unit 45 ensures the optical wavelength path resource to be assigned by changing route information.

The external device management function unit 45 also adds, to the address management table of the packet transfer apparatus 3A, an entry which guides destination IPv6 packet address prefix: IPv6_#3 and assigned optical wavelength path identifier 72 for destination IPv4 packet address: IPv4#5.

At the start of communication, the user terminal 6B generates and transmits an optical wavelength path setting request packet to the packet transfer apparatus 3A, as described above, and the optical wavelength path setting request packet is transferred from the packet transfer apparatus 3A to the admission control server 4, as described above.

The route setting function unit 41 of the admission control server 4 refers to transmission source IPv4 packet address: IPv4#2 of the packet by using the optical wavelength path setting determination function unit 42, as described above. The route setting function unit 41 detects that the user terminal 6B does not request band guarantee and rejects optical wavelength path setting.

Subsequently, the route setting function unit 41 specifies destination IPv6 packet address prefix: IPv6_#3 by referring to destination IPv4 packet address: IPv4#6 of the packet by using the destination packet transfer apparatus specifying table 43.

The route setting function unit 41 specifies the transmission source packet transfer apparatus 3A and destination packet transfer apparatus 3C as optical wavelength path assignment targets by simultaneously referring to transmission source IPv6 packet address prefix: IPv6_#1.

The route analysis function unit 44 specifies the optical wavelength path to be assigned through frame transfer. The external device management function unit 45 ensures the optical wavelength path resource to be assigned by changing route information.

The external device management function unit 45 also adds, to the address management table of the packet transfer apparatus 3A, an entry which guides destination IPv6 packet address prefix: IPv6_#3 and assigned optical wavelength path identifier 71 for destination IPv4 packet address: IPv4#6.

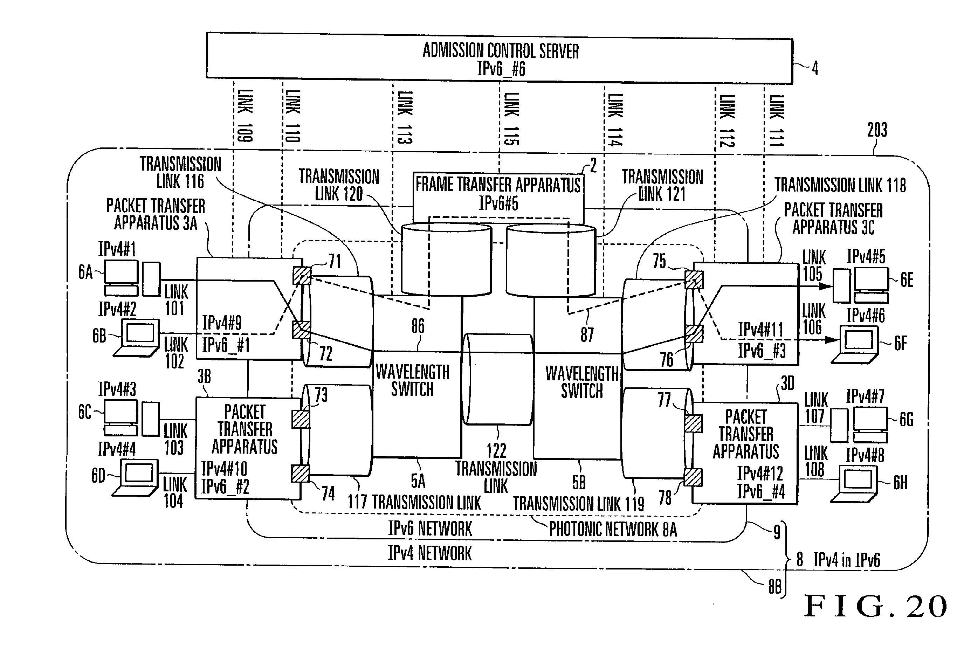

The address management table of the packet transfer apparatus 3A has the registered contents in Fig. 15 described above. At this point, the transfer route as shown in Fig. 20 is set.

More specifically, a transfer route 86 is set from the user terminal 6A to the user terminal 6E through the packet transfer apparatus 3A, optical wavelength path (cut-through optical wavelength path 83), and packet transfer apparatus 3C.

A transfer route 87 is set from the user terminal 6B to the user terminal 6F through the packet transfer apparatus 3A, optical wavelength path 81, frame transfer apparatus 2, optical wavelength path 83, and packet transfer apparatus 3C.

After the transfer routes 86 and 87 are set, the user terminal 6A transmits an IPv4 packet having transmission source IPv4 packet address: IPv4#1 and destination IPv4 packet address: IPv4#5.

In the packet transfer apparatus 3A, the reception frame processing unit 32 receives the IPv4 packet from the link 101. The reception frame processing unit 32 transfers the received IPv4 packet to the packet processing unit 33.

The packet processing unit 33 extracts destination IPv4 packet address: IPv4#5 and transfers it to the forwarding processing unit 34.

The forwarding processing unit 34 searches the address management table 35 by using IPv4#5 extracted by the packet processing unit 33 as a search key.

At this time, the entry added by the admission control server 4 by the above-described operation, i.e., the entry which guides destination IPv6 packet address prefix: IPv6_#3 and assigned optical wavelength path identifier 72 for destination IPv4 packet address: IPv4#5 is detected.

The transmission frame processing unit 37 generates transmission source IPv6 packet address: IPv6_#1_72 from destination IPv6 packet address prefix: IPv6_#1 held by the packet transfer apparatus 3A itself and the optical wavelength path identifier 72 held by destination IPv6 packet address: IPv6_#3_72.

The IPv4 packet is encapsulated in an IP in IPv6 packet. The encapsulated IP in IPv6 packet is output to the optical wavelength path 83 described in destination IPv6 packet address: IPv6_#3_72.

The IP in IPv6 packet is transferred to the packet transfer apparatus 3C through the optical wavelength path 83. The IP in IPv6 packet is decapsulated by the packet transfer apparatus 3C. The resultant IPv4 packet is transferred to the user terminal 6F on the basis of destination IPv4 packet address: IPv4#5.

The IPv4 packet transmitted from the user terminal 6B and having destination IPv4 packet address: IPv4#6 is encapsulated in an IP in IPv6 packet by the packet transfer apparatus 3A and output to the optical wavelength path 81 described in destination IPv6 packet address: IPv6_#3_71.

The IP in IPv6 packet is transferred to the frame transfer apparatus 2 and output to the optical wavelength path 83 and arrives at the packet transfer apparatus 3C. The IP in IPv6 packet is transferred to the user terminal 6E on the basis of destination IPv4 packet address: IPv4#6.

As described above, an optical wavelength path which can exclusively be used by the user is set between packet transfer apparatuses of the transmission source and destination in accordance with a band guarantee request from the user while utilizing the existing photonic network. For this reason, the communication capacity can flexibly be expanded, and a band-guarantee-type network service can be provided.

When no band guarantee request is present, an optical wavelength path which passes through the frame transfer apparatus is set between packet transfer apparatuses of the transmission source and destination. Since the transfer resources of IP transfer routes are shared, the cost of transfer resource acquisition can be reduced while ensuring reachability of communication. In addition, scalability can be increased.

In the above-described example shown in Figs. 19 and 10, an optical wavelength path which can exclusively be used by the user is set from the transmission source packet transfer apparatus 3A to a specific destination user terminal by using the address management table shown in Fig. 15. Even when the address management table shown in Fig. 16 is used in the packet transfer apparatus 3A, and the admission control server 4 registers transmission source and destination IPv4 addresses and the IPv6 address of an optical wavelength path in the address management table of the packet transfer apparatus 3A in correspondence with each other, an optical wavelength path which can exclusively be used by the user can be set between specific transmission source and destination user terminals.

The above description has been done by using the network model shown in Fig. 11 as an example. However, the present invention is not limited to this. Even when numbers of packet communication apparatuses, user terminals, wavelength switches, transmission links, and frame transfer apparatuses or the connection relationship between them is appropriately changed, the same function and effect as described above can be obtained.

### Industrial Applicability

As described above, the packet communication network according to the present invention is useful in building a service provider network of which broadband and base count scalability are required. When the present invention is applied, a broadband Internet connection service can be provided to many subscribers.

## Claims

1. A packet communication network **characterized by** comprising a plurality of routers which are connected in a network form through communication links, and a plurality of route control servers each of which is arranged in one of areas provided by dividing the packet communication network and controls the router in the area,
wherein said route control server comprises a destination information acquisition unit which acquires destination information of a packet from header information of the packet, the header information being sent from said router in the area, a route control unit which generates inter-server information containing the destination information acquired by said destination information acquisition unit and transfer management information made to correspond to the destination information in advance, an inter-server information transmission/reception unit which transmits/receives the inter-server information to/from another route control server, and a packet control unit which determines an output interface of the packet in said router on the basis of the destination information and transfer management information and determines the output interface of the packet on the basis of destination information and transfer management information contained in inter-server information from another route control server, and
said router comprises a header information acquisition unit which acquires the header information from the arrival packet and notifies the route control server of the acquired header information, and an output interface control unit which outputs the arrival packet from the output interface corresponding to the packet to a communication link connected to the output interface on the basis of the determination in said route control server.

2. A packet communication network according to claim 1, **characterized by** further comprising
a plurality of packet transfer apparatuses each of which is provided in each area to store a plurality of user terminals and connected to an optical wavelength path of the photonic network, encapsulates, in a lower layer frame, an upper layer packet received from one of a user network which stores a transmission source user terminal and an external network which stores the transmission source user terminal and transfers the lower layer frame, in transmitting the lower layer frame to the external network, transfers the lower layer frame after decapsulating the lower layer frame to the upper layer packet, and executes mutual conversion and transfer of an upper layer packet on a side of a user terminal corresponding to an upper layer packet address and a lower layer frame on a side of an optical wavelength path corresponding to a lower layer frame address on the basis of an address management table which manages correspondence between the upper layer packet address and the destination lower layer frame address, and
an admission control server which is provided in each area and sets, of optical wavelength paths of the photonic network, an optical wavelength path to connect packet transfer apparatuses of transmission source and destination in accordance with an optical wavelength path connection request received from the transmission source user terminal through said packet transfer apparatus,
wherein said router comprises a frame transfer apparatus which is connected to the optical wavelength path of the photonic network to receive the lower layer frame from the transmission source packet transfer apparatus and transfer the lower layer frame to a packet transfer apparatus corresponding to the upper layer packet address of the upper layer packet in the lower layer frame, and
said admission control server comprises a route setting function unit which, in setting the optical wavelength path, registers correspondence between the upper layer packet address of the user terminal and the lower layer frame address corresponding to the optical wavelength path in the address management tables of the packet transfer apparatuses of the transmission source and destination, sets, between the packet transfer apparatuses of the transmission source and destination, an optical wavelength path formed from a cut-through optical wavelength path which has a guaranteed band and passes through only at least one wavelength switch when a band guarantee request is present, and sets an optical wavelength path which connects the packet transfer apparatuses of the transmission source and destination through said frame transfer apparatus when no band guarantee request is present.

3. A packet communication network according to claim 2, **characterized in that**
said packet transfer apparatus manages correspondence between a destination upper layer packet address and a destination lower layer frame address in the address management table, converts the upper layer packet from the user terminal side into the lower layer frame, and transfers the lower layer frame to the optical wavelength path of the destination lower layer frame address corresponding to the destination upper layer packet address.

4. A packet communication network according to claim 2, **characterized in that**
said packet transfer apparatus manages correspondence between transmission source and destination upper layer packet addresses and a destination lower layer frame address in the address management table, converts the upper layer packet from the user terminal side into the lower layer frame, and transfers the lower layer frame to the optical wavelength path of the destination lower layer frame address corresponding to the transmission source and destination upper layer packet addresses.

5. A route control server which is arranged in one of areas provided by dividing a packet communication network including a plurality of routers, **characterized by** comprising:
a destination information acquisition unit which acquires destination information of a packet from header information of the packet, the header information being sent from the router in the area;
a route control unit which generates inter-server information containing the destination information acquired by said destination information acquisition unit and transfer management information made to correspond to the destination information in advance;
an inter-server information transmission/reception unit which transmits/receives the inter-server information to/from another route control server; and
a packet control unit which determines an output interface of the packet in the router on the basis of the destination information and transfer management information,
wherein said packet control unit determines the output interface of the packet on the basis of destination information and transfer management information contained in inter-server information from another route control server.

6. A route control server according to claim 5, **characterized in that** in transmitting the inter-server information, said inter-server information transmission/reception unit transmits the inter-server information to only a route control server in an area through which the packet having the destination information passes.

7. A route control server according to claim 5, **characterized in that** said packet control unit determines the output interface of the packet having the destination information on the basis of the destination information and transfer management information contained in the received inter-server information which said inter-server information transmission/reception unit has received from another route control server.

8. A route control server according to claim 7, **characterized in that** said packet control unit determines the output interface related to the destination information only when a subsequent area through which the packet having the destination information of the inter-server information passes is present.

9. A route control server according to claim 5, **characterized in that** the transfer management information contains information representing one of priority and a size of a communication band in transfer processing of the packet having the destination information.

10. A route control method **characterized by** comprising:
the header information acquisition step of causing a plurality of routers which are connected in a network form through communication links to form a packet communication network to acquire header information from an arrival packet and send the header information to, of a plurality of route control servers each of which is arranged in one of areas provided by dividing the packet communication network and controls the router in the area, a route control server corresponding to the area of the router;
the destination information acquisition step of causing the route control server to acquire destination information of the packet from the header information of the packet, the header information being sent from the router in the area;
the route control step of causing the route control server to generate inter-server information containing the destination information acquired in the destination information acquisition step and transfer management information made to correspond to the destination information in advance;
the inter-server information transmission/reception step of causing the route control server to transmit/receive the inter-server information to/from another route control server;
the packet control step of causing the route control server to determine an output interface of the packet in the router on the basis of the destination information and transfer management information and determine the output interface of the packet on the basis of destination information and transfer management information contained in inter-server information from another route control server; and
the output interface control step of causing the router to output the arrival packet from the output interface corresponding to the packet to a communication link connected to the output interface on the basis of the determination in the route control server.

11. A program which causes a computer of a route control server which is arranged in one of areas provided by dividing a packet communication network including a plurality of routers and controls the router in the area to execute:
the destination information acquisition step of acquiring destination information of a packet from header information of the packet, the header information being sent from the router in the area;
the route control step of generating inter-server information containing the destination information acquired in the destination information acquisition step and transfer management information made to correspond to the destination information in advance;
the inter-server information transmission/reception step of transmitting/receiving the inter-server information to/from another route control server; and
the packet control step of determining an output interface of the packet in the router on the basis of the destination information and transfer management information and determining the output interface of the packet on the basis of destination information and transfer management information contained in inter-server information from another route control server.

12. A recording medium which records a program to cause a computer of a route control server which is arranged in one of areas provided by dividing a packet communication network including a plurality of routers and controls the router in the area to execute:
the destination information acquisition step of acquiring destination information of a packet from header information of the packet, the header information being sent from the router in the area;
the route control step of generating inter-server information containing the destination information acquired in the destination information acquisition step and transfer management information made to correspond to the destination information in advance;
the inter-server information transmission/reception step of transmitting/receiving the inter-server information to/from another route control server; and
the packet control step of determining an output interface of the packet in the router on the basis of the destination information and transfer management information and determining the output interface of the packet on the basis of destination information and transfer management information contained in inter-server information from another route control server.

13. A packet communication network **characterized by** comprising:
a plurality of packet transfer apparatuses each of which stores a plurality of user terminals, is connected to an optical wavelength path of a photonic network including a transmission link having an optical wavelength path multiplex transmission function and a wavelength switch having an optical wavelength path switching function, encapsulates, in a lower layer frame, an upper layer packet received from one of a user network which stores a transmission source user terminal and an external network which stores the transmission source user terminal and transfers the lower layer frame, in transmitting the lower layer frame to the external network, transfers the lower layer frame after decapsulating the lower layer frame to the upper layer packet, and executes mutual conversion and transfer of an upper layer packet on a side of a user terminal corresponding to an upper layer packet address and a lower layer frame on a side of an optical wavelength path corresponding to a lower layer frame address on the basis of an address management table which manages correspondence between the upper layer packet address and the destination lower layer frame address;
an admission control server which sets, of optical wavelength paths of the photonic network, an optical wavelength path to connect packet transfer apparatuses of transmission source and destination in accordance with an optical wavelength path connection request received from the transmission source user terminal through said packet transfer apparatus; and
a frame transfer apparatus which is connected to the optical wavelength path of the photonic network to receive the lower layer frame from the transmission source packet transfer apparatus and transfer the lower layer frame to a packet transfer apparatus corresponding to the upper layer packet address of the upper layer packet in the lower layer frame,
wherein said admission control server comprises a route setting function unit which, in setting the optical wavelength path, registers correspondence between the upper layer packet address of the user terminal and the lower layer frame address corresponding to the optical wavelength path in the address management tables of the packet transfer apparatuses of the transmission source and destination, sets, between the packet transfer apparatuses of the transmission source and destination, an optical wavelength path formed from a cut-through optical wavelength path which has a guaranteed band and passes through only at least one wavelength switch when a band guarantee request is present, and sets an optical wavelength path which connects the packet transfer apparatuses of the transmission source and destination through said frame transfer apparatus when no band guarantee request is present.

14. A packet communication network according to claim 13, **characterized in that**
said packet transfer apparatus manages correspondence between a destination upper layer packet address and a destination lower layer frame address in the address management table, converts the upper layer packet from the user terminal side into the lower layer frame, and transfers the lower layer frame to the optical wavelength path of the destination lower layer frame address corresponding to the destination upper layer packet address.

15. A packet communication network according to claim 13, **characterized in that**
said packet transfer apparatus manages correspondence between transmission source and destination upper layer packet addresses and a destination lower layer frame address in the address management table, converts the upper layer packet from the user terminal side into the lower layer frame, and transfers the lower layer frame to the optical wavelength path of the destination lower layer frame address corresponding to the transmission source and destination upper layer packet addresses.

16. A packet transfer apparatus **characterized in that** said apparatus is used in a packet communication network formed from a network logically built on a photonic network including a transmission link having an optical wavelength path multiplex transmission function and a wavelength switch having an optical wavelength path switching function, the packet communication network comprising an admission control server which sets, of optical wavelength paths of the photonic network, one of an optical wavelength path formed from a cut-through optical wavelength path which has a guaranteed band and connects packet transfer apparatuses of transmission source and destination through only at least one wavelength switch and an optical wavelength path which connects the packet transfer apparatuses through a frame transfer apparatus in accordance with an optical wavelength path connection request received from the transmission source user terminal through the packet transfer apparatus, and comprises:
a forwarding processing unit which manages correspondence between a destination upper layer packet address and a destination lower layer frame address and executes mutual conversion of a destination address of a received packet between an upper layer and a lower layer on the basis of an address management table in which correspondence between an upper layer packet address of a user terminal which is stored in the packet transfer apparatus and a lower layer frame address corresponding to the optical wavelength path is registered in accordance with setting of the optical wavelength path from the admission control server;
a packet processing unit which encapsulates the upper layer packet received from the user terminal in the lower layer frame and decapsulates the lower layer frame received from the optical wavelength path to the upper layer packet; and
a transmission frame processing unit which transfers the packet encapsulated by said packet processing unit to the optical wavelength path corresponding to the destination lower layer frame address obtained by said forwarding processing unit and transfers the packet decapsulated by said packet processing unit to the user terminal of the destination upper layer packet address obtained by said forwarding processing unit.

17. A packet transfer apparatus according to claim 16, **characterized in that**
said forwarding processing unit uses, as the address management table, an address management table in which correspondence between the upper layer packet address of a destination user terminal and the lower layer frame address corresponding to the optical wavelength path is registered in accordance with setting of the optical wavelength path from the admission control server, and
said transmission frame processing unit transfers the lower layer frame obtained by encapsulating the upper layer packet from the user terminal side to the optical wavelength path of the destination lower layer frame address obtained from the address management table in correspondence with the destination upper layer packet address.

18. A packet transfer apparatus according to claim 16, **characterized in that**
said forwarding processing unit uses, as the address management table, an address management table in which correspondence between the upper layer packet addresses of transmission source and destination user terminals and the lower layer frame address corresponding to the optical wavelength path is registered in accordance with setting of the optical wavelength path from the admission control server, and
said transmission frame processing unit transfers the lower layer frame obtained by encapsulating the upper layer packet from the user terminal side to the optical wavelength path of the destination lower layer frame address obtained from the address management table in correspondence with the transmission source and destination upper layer packet addresses.

19. An admission control server **characterized in that** said admission control server is used in a packet communication network formed from a network logically built on a photonic network including a transmission link having an optical wavelength path multiplex transmission function and a wavelength switch having an optical wavelength path switching function, the packet communication network comprising a packet transfer apparatus which stores a plurality of user terminals, is connected to an optical wavelength path of the photonic network, and executes mutual conversion and transfer of an upper layer packet on a side of a user terminal corresponding to an upper layer packet address and a lower layer frame on a side of an optical wavelength path corresponding to a lower layer frame address on the basis of an address management table which manages correspondence between the upper layer packet address and the destination lower layer frame address, and comprises:
a route setting function unit which sets, of optical wavelength paths of the photonic network, an optical wavelength path formed from a cut-through optical wavelength path which has a guaranteed band and directly connects packet transfer apparatuses of transmission source and destination in accordance with an optical wavelength path connection request received from the transmission source user terminal through the packet transfer apparatus; and
an external device management function unit which registers correspondence between the upper layer packet address of the user terminal and the lower layer frame address corresponding to the optical wavelength path in the address management tables of the packet transfer apparatuses of the transmission source and destination in setting the optical wavelength path.

20. An admission control server according to claim 19, **characterized in that** in setting the optical wavelength path, said route setting function unit sets the optical wavelength path formed from the cut-through optical wavelength path between the packet transfer apparatuses of the transmission source and destination when a band guarantee request is present and sets an optical wavelength path which connects the packet transfer apparatuses of the transmission source and destination through a frame transfer apparatus to transfer the lower layer frame through the photonic network when no band guarantee request is present.

21. An admission control server according to claim 19, **characterized by** further comprising an optical wavelength path setting determination function unit which confirms presence/absence of the band guarantee request by referring to contract user information of a band guarantee service, which is registered in correspondence with each user terminal in advance, on the basis of the transmission source upper layer packet address of the transmission source user terminal contained in the optical wavelength path connection request.

22. An admission control server according to claim 19, **characterized by** further comprising a destination packet transfer apparatus specifying table which guides, from the destination upper layer packet address, a destination lower layer frame address prefix representing the destination packet transfer apparatus which stores a user terminal having the address,
wherein said route setting function unit specifies the transmission source packet transfer apparatus on the basis of the transmission source lower layer frame address prefix contained in the optical wavelength path connection request, specifies the destination packet transfer apparatus on the basis of the destination upper layer packet address contained in the optical wavelength path connection request by looking up said destination packet transfer apparatus specifying table, and sets the cut-through optical wavelength path between the transmission source packet transfer apparatus and the destination packet transfer apparatus by controlling the transmission source packet transfer apparatus, the destination packet transfer apparatus, and the wavelength switch of the photonic network.

23. An admission control server according to claim 19, **characterized in that** in setting the optical wavelength path, by transmitting a table control packet to the packet transfer apparatus, said external device management function unit adds, to the address management table of the packet transfer apparatus, a destination lower layer frame address which corresponds to the destination upper layer packet address and contains a lower layer frame address prefix representing the destination packet transfer apparatus and an identifier representing an optical wavelength path to be used.

24. An admission control server according to claim 19, **characterized in that** in setting the optical wavelength path, said external device management function unit adds, to the address management table of the packet transfer apparatus, a destination lower layer frame address which corresponds to the transmission source and destination upper layer packet addresses and contains a lower layer frame address prefix representing the destination packet transfer apparatus and an identifier representing an optical wavelength path to be used by transmitting a table control packet to the packet transfer apparatus.

25. An optical wavelength path setting method **characterized by** comprising:
the step of causing a plurality of packet transfer apparatuses each of which stores a plurality of user terminals and is connected to an optical wavelength path of a photonic network including a transmission link having an optical wavelength path multiplex transmission function and a wavelength switch having an optical wavelength path switching function to encapsulate, in a lower layer frame, an upper layer packet received from one of a user network which stores a transmission source user terminal and an external network which stores the transmission source user terminal and transfer the lower layer frame, in transmitting the lower layer frame to the external network, transfer the lower layer frame after decapsulating the lower layer frame to the upper layer packet, and execute mutual conversion and transfer of an upper layer packet on a side of a user terminal corresponding to an upper layer packet address and a lower layer frame on a side of an optical wavelength path corresponding to a lower layer frame address on the basis of an address management table which manages correspondence between the upper layer packet address and the destination lower layer frame address;
the step of causing a frame transfer apparatus which is connected to the optical wavelength path of the photonic network to receive the lower layer frame from the transmission source packet transfer apparatus and transfer the lower layer frame to a packet transfer apparatus corresponding to the upper layer packet address of the upper layer packet in the lower layer frame;
the step of causing an admission control server which is connected to the wavelength switch, the packet transfer apparatus, and the frame transfer apparatus to set, of optical wavelength paths of the photonic network, an optical wavelength path to connect packet transfer apparatuses of transmission source and destination in accordance with an optical wavelength path connection request received from the transmission source user terminal through the packet transfer apparatus; and
the route setting function step of, in setting the optical wavelength path, causing the admission control server to register correspondence between the upper layer packet address of the user terminal and the lower layer frame address corresponding to the optical wavelength path in the address management tables of the packet transfer apparatuses of the transmission source and destination, set, between the packet transfer apparatuses of the transmission source and destination, an optical wavelength path formed from a cut-through optical wavelength path which has a guaranteed band and passes through only at least one wavelength switch when a band guarantee request is present, and set an optical wavelength path which connects the packet transfer apparatuses of the transmission source and destination through the frame transfer apparatus when no band guarantee request is present.

26. A program which causes a computer of a packet transfer apparatus provided in a packet communication network formed from a network logically built on a photonic network including a transmission link having an optical wavelength path multiplex transmission function and a wavelength switch having an optical wavelength path switching function, the packet communication network comprising an admission control server which sets, of optical wavelength paths of the photonic network, one of an optical wavelength path formed from a cut-through optical wavelength path which has a guaranteed band and connects packet transfer apparatuses of transmission source and destination through only at least one wavelength switch and an optical wavelength path which connects the packet transfer apparatuses through a frame transfer apparatus in accordance with an optical wavelength path connection request received from the transmission source user terminal through the packet transfer apparatus, to execute:
the forwarding processing step of managing correspondence between a destination upper layer packet address and a destination lower layer frame address and executing mutual conversion of a destination address of a received packet between an upper layer and a lower layer on the basis of an address management table in which correspondence between an upper layer packet address of a user terminal which is stored in the packet transfer apparatus and a lower layer frame address corresponding to the optical wavelength path is registered in accordance with setting of the optical wavelength path from the admission control server;
the packet processing step of encapsulating the upper layer packet received from the user terminal in the lower layer frame and decapsulating the lower layer frame received from the optical wavelength path to the upper layer packet; and
the transmission frame processing step of transferring the packet encapsulated in the packet processing step to the optical wavelength path corresponding to the destination lower layer frame address obtained in the forwarding processing step and transferring the packet decapsulated in the packet processing step to the user terminal of the destination upper layer packet address obtained in the forwarding processing step.

27. A program which causes a computer of an admission control server provided in a packet communication network formed from a network logically built on a photonic network including a transmission link having an optical wavelength path multiplex transmission function and a wavelength switch having an optical wavelength path switching function, the packet communication network comprising a packet transfer apparatus which stores a plurality of user terminals, is connected to an optical wavelength path of the photonic network, and executes mutual conversion and transfer of an upper layer packet on a side of a user terminal corresponding to an upper layer packet address and a lower layer frame on a side of an optical wavelength path corresponding to a lower layer frame address on the basis of an address management table which manages correspondence between the upper layer packet address and the destination lower layer frame address, to execute:
the route setting function step of setting, of optical wavelength paths of the photonic network, an optical wavelength path formed from a cut-through optical wavelength path which has a guaranteed band and directly connects packet transfer apparatuses of transmission source and destination in accordance with an optical wavelength path connection request received from the transmission source user terminal through the packet transfer apparatus; and
the external device management function step of registering correspondence between the upper layer packet address of the user terminal and the lower layer frame address corresponding to the optical wavelength path in the address management tables of the packet transfer apparatuses of the transmission source and destination in setting the optical wavelength path.

28. A recording medium which records a program to cause a computer of a packet transfer apparatus provided in a packet communication network formed from a network logically built on a photonic network including a transmission link having an optical wavelength path multiplex transmission function and a wavelength switch having an optical wavelength path switching function, the packet communication network comprising an admission control server which sets, of optical wavelength paths of the photonic network, one of an optical wavelength path formed from a cut-through optical wavelength path which has a guaranteed band and connects packet transfer apparatuses of transmission source and destination through only at least one wavelength switch and an optical wavelength path which connects the packet transfer apparatuses through a frame transfer apparatus in accordance with an optical wavelength path connection request received from the transmission source user terminal through the packet transfer apparatus, to execute:
the forwarding processing step of managing correspondence between a destination upper layer packet address and a destination lower layer frame address and executing mutual conversion of a destination address of a received packet between an upper layer and a lower layer on the basis of an address management table in which correspondence between an upper layer packet address of a user terminal which is stored in the packet transfer apparatus and a lower layer frame address corresponding to the optical wavelength path is registered in accordance with setting of the optical wavelength path from the admission control server;
the packet processing step of encapsulating the upper layer packet received from the user terminal in the lower layer frame and decapsulating the lower layer frame received from the optical wavelength path to the upper layer packet; and
the transmission frame processing step of transferring the packet encapsulated in the packet processing step to the optical wavelength path corresponding to the destination lower layer frame address obtained in the forwarding processing step and transferring the packet decapsulated in the packet processing step to the user terminal of the destination upper layer packet address obtained in the forwarding processing step.

29. A recording medium which stores a program to cause a computer of an admission control server provided in a packet communication network formed from a network logically built on a photonic network including a transmission link having an optical wavelength path multiplex transmission function and a wavelength switch having an optical wavelength path switching function, the packet communication network comprising a packet transfer apparatus which stores a plurality of user terminals, is connected to an optical wavelength path of the photonic network, and executes mutual conversion and transfer of an upper layer packet on a side of a user terminal corresponding to an upper layer packet address and a lower layer frame on a side of an optical wavelength path corresponding to a lower layer frame address on the basis of an address management table which manages correspondence between the upper layer packet address and the destination lower layer frame address, to execute:
the route setting function step of setting, of optical wavelength paths of the photonic network, an optical wavelength path formed from a cut-through optical wavelength path which has a guaranteed band and directly connects packet transfer apparatuses of transmission source and destination in accordance with an optical wavelength path connection request received from the transmission source user terminal through the packet transfer apparatus; and
the external device management function step of registering correspondence between the upper layer packet address of the user terminal and the lower layer frame address corresponding to the optical wavelength path in the address management tables of the packet transfer apparatuses of the transmission source and destination in setting the optical wavelength path.
